(19) Europäisches Patentamt
European Patent Office
Office européen des brevets

(11) **EP 2 478 058 B1**

(12) **EUROPEAN PATENT SPECIFICATION**

(45) Date of publication and mention
of the grant of the patent:
**14.10.2020  Bulletin 2020/42**

(21) Application number: **10760128.8**

(22) Date of filing: **16.09.2010**

(51) Int Cl.:
*C08L 95/00* (2006.01)         *E01C 7/24* (2006.01)
*E01C 7/35* (2006.01)         *C08L 5/00* (2006.01)
*C08L 91/00* (2006.01)         *C08L 93/00* (2006.01)
*C08L 101/00* (2006.01)         *E01C 7/18* (2006.01)

(86) International application number:
**PCT/NL2010/050598**

(87) International publication number:
**WO 2011/034424 (24.03.2011 Gazette 2011/12)**

(54) **Waterproofing asphalt top seal composition**

Zusammensetzung zur Abdichtung  von Asphaltoberflächen gegen Wasser

Composition destinée à imperméabiliser les surfaces asphaltées

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **17.09.2009  EP 09170595
17.09.2009  US 243294 P**

(43) Date of publication of application:
**25.07.2012  Bulletin 2012/30**

(73) Proprietor: **Latexfalt B.V.
2396 AP  Koudekerk a/d Rijn (NL)**

(72) Inventors:
• **LOMMERTS, Bert Jan
NL-1703 RB Heerhugowaard (NL)**
• **COTIUGA, Irina Manuela
NL-3521 GZ Utrecht (NL)**
• **PASSIES, Harriet
NL-3645 DR Vinkeveen (NL)**

(74) Representative: **Nederlandsch Octrooibureau
P.O. Box 29720
2502 LS The Hague (NL)**

(56) References cited:
**EP-A1- 0 370 911         EP-A1- 0 652 259
WO-A1-2009/113854     FR-A1- 2 727 699
US-A- 5 246 986         US-A- 5 750 598**

Remarks:
The file contains technical information submitted after the application was filed and not included in this specification

**Description**

**Field of the invention**

The present invention relates to waterproofing chipless asphalt top seal compositions. The compositions provide a less rough surface, less bitumen contamination and less loose aggregate material after their application. The compositions can be employed under unfavourable environmental conditions such as high humidity and low temperature.

**Background of the invention**

Sealing of asphalt roads is important as this treatment will prolong the service life of the road. Various sealing techniques are available and surface dressing, slurry sealing and micro-surfacing are commonly used techniques for maintenance of asphalt roads.

Surface dressing of asphalt pavements is one of the most cost-effective solutions for road maintenance as material costs are low and the rate of application is relatively high. A thin layer of a surface dressing, e.g. a bitumen emulsion, a cutback bitumen or a vegetable oil modified bitumen, is applied onto a clean asphalt base layer by bitumen tankers equipped with a spray bar. Subsequently, aggregate material is applied and upon drying the chips adhere to and are embedded in the bituminous layer.

After compaction of the aggregate material, the road is reopened for traffic and the aggregate material will be embedded further into the bituminous layer as well as into the asphalt base layer. Due to the presence of loose aggregate material, traffic speed needs to be limited for a certain period of time, despite that the road is swept once or twice per month after the surface dressing and the aggregate material have been applied. Although this maintenance technology is fairly efficient and economical, surface dressing can create a nuisance to the public.

For example, speed restrictions are a nuisance to the public. Moreover, loose aggregate material is unpleasant to drive and the initial anti-skid performance of an unswept road is not sufficient. The rough texture of a surface dressing can be noticed by the high level of noise and vibrations in the car and e.g. for skaters and cyclists the rough texture is for the same reason even a greater nuisance. Furthermore, on such surfaces, traffic generates noise at an unpleasant level for the public. Further disadvantages include bleeding of bitumen due to overspray giving rise to the formation of bitumen spots, wheel tracks due to local embedding of the aggregate material, formation of aggregate material partially coated soft bitumen which may stick to shoes and tires and which, especially in urban areas, can be dragged into the houses creating all kind of damages. Additionally, people, for instances playing children, may fall on these rough surfaces and may easily be wounded. For these reasons, surface dressing has become less popular in e.g. the Netherlands and especially in urban areas and other densely populated regions, so that the area of asphalt roads maintained in this manner is relatively small. But also in other highly developed countries like Japan, the volumes of surface dressing is small compared to other maintenance techniques. Asphalt overlays or thin asphalt overlays have therefore become very popular despite the less favourable economics of these systems.

In view of the above, there is a strong need for a maintenance technique which has more or less the same economics as surface dressing but which creates a less rough surface and which does not have the disadvantages associated surface dressing.

Low penetration grade bitumen (also known as hard bitumen) is very difficult to emulsify as is well known in the art. The harder the bitumen, the lower the needle penetration value and the higher the softening point, but also the more difficult it becomes to emulsify the bitumen into storage stable, fast breaking bituminous emulsions. Low storage stability is reflected in a fast rate of separation of an aqueous upper phase and a bitumen-rich lower phase when a bituminous emulsion is stored at room temperature under quiescent conditions. The difference in water content between the phases formed is the value for the so-called storage stability, which is determined according to standard method NEN-EN 12847. Hence, the lower this value, the better the storage stability is and a value of zero indicates perfect storage stability. The storage stability is often expressed in a percentage and to obtain such percentages, the values must be multiplied by 100%.

Slow breaking of a bituminous emulsion is reflected in a long period of time before a solid film is formed after application of the emulsion to the road surface. It is well accepted in the art that the breaking index, or sometimes also called filler index, is a good measure for the time to break the bituminous emulsion after application to a road surface. A high breaking index implies slow breaking. The breaking index is usually determined according to standard method NEN-EN 13075-1.

Storage stability can be improved by including more emulsifier in the bituminous emulsion. However, although improved storage stability is achieved, the breaking index also increases significantly which is obviously not desired.

A further advantage of bituminous emulsions having a low breaking index is that these emulsions will also break relatively quickly under humid and cold conditions allowing the product to be used under less favourable environmental conditions.

US 5.246.986 of Elf France discloses an emulsion of a bituminous binder wherein a thickening agent is employed that contains at least 40% by weight of scleroglucan, wherein it is preferred that the aqueous phase of the emulsion comprises 100 to 5000 ppm, preferably 200 to 2000 ppm of scleroglucan. Examples 2 and 4 discloses cationic emulsions comprising bitumen having a penetration of 180 - 220 $10^{-1}$ mm and scleroglucan of a technical grade (which consists of 70 wt.% of scleroglucan and 30 wt.% of biomass), wherein the scleroglucan (calculated on actual scleroglucan content) is 0.021 wt.%. The penetration was determined according to NF Standard T 66004 which is equivalent to ASTM D5-97 (cf. C. Garrigues and P. Vincent, "Sulfur/Asfalt binders for Road Construction", "New uses of Sulfur", Chapter 8, pages 130 - 153, 1975; DOI 10.1021/ba-1975-0140.ch008, Advances in Chemistry, Vol. 140, ISBN13: 9780841202184, eISBN: 9780841223219). US 5.246.986 does not disclose waterproofing chipless asphalt top seal compositions comprising particulate material.

US 5.750.598 of Elf France discloses vulcanizable bitumen/polymer compositions comprising bitumen, an elastomer that can be vulcanized, a sulfur-donating vulcanization agent, a vulcanization accelerator and a viscosity-reducing agent. These compositions can be used for manufacturing emulsions which optionally comprise a viscosity-controlling additive, e.g. a water soluble polyurethane or a gum such as xanthan or scleroglucan.

GB A 2452903 of Colas S.A. discloses an emulsion comprising an aqueous phase and an organic phase comprising a binder composition, wherein the binder composition comprises bitumen and a non-aromatic polymer, in particular polyisoprene. The emulsion is preferably cationic. The bitumen has preferably a penetration of 50 to 150 $10^{-1}$ mm. The emulsion is rapidly breaking as indicated by a breaking index (according to NFT 66-017 (tentative French National Standard December 1983) of 45 - 100. The emulsion preferably comprises 45 - 75 wt.% of the binder composition, based on the total weight of the emulsion.

WO 2009/113854 of Latexfalt B.V. discloses emulsions comprising a (1→3)-β-D-glucan, preferably scleroglucan, a biodegradable emulsifier which may be non-ionic or cationic, and bitumen. The bitumen have a penetration in the range of about 10 to about 350 $10^{-1}$ mm according to ASTM D5-97, more preferably about 70 to about 220 $10^{-1}$ mm.

As explained above, there is a need in the art for bituminous emulsions having excellent storage stability which are fast breaking. In particular, there is a need in the art for such bituminous emulsions which incorporate low penetration bitumen (also known as hard bitumen). There is also a need in the art for a maintenance technique which has more or less the same economics as surface dressing but which does not have the disadvantages associated surface dressing.

**Summary of the invention**

The present invention relates to waterproofing chipless asphalt top seal composition comprising (a) a particulate material, wherein the average diameter of the particulate material is 3 mm or less as determined according to British Standard BS 63, preferably less than 2 mm, and (b) an emulsion comprising a (1→3)-β-D-glucan, a cationic emulsifier, and a bituminous binder having a penetration of less than 70 $10^{-1}$ mm and more than 10 $10^{-1}$ mm according to ASTM D5-97, wherein the (1→3)-β-D-glucan is used in admixture with an oil,
wherein the emulsion comprises 0.0005 wt.% to 0.1 wt.% of the (1→3)-β-D-glucan and 0.01 wt.% to 20 wt.% of the cationic emulsifier, based on the total weight of the emulsion,
wherein the (1→3)-β-D-glucan is scleroglucan, and
wherein the the cationic emulsifier is:

(a) derived from amines having the formula:

$$R\text{-}NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p in an integer in the range of 0 to 6, and n is an integer in the range of 1 - 8; or
(b) derived from amidoamines having the formula:

$$R\text{-}C(O)NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8.

The average diameter of the particulate material is determined according to British standard BS 63. However, according to the current European standard NEN-EN 13043, two dimensions are used to characterize the size of particulate material (d/D; NEN-EN 13043). A size of 3 mm according to BS 63 is equal to a d/D of 1/4 (cf. Shell Bitumen Handbook, 5th Ed., page 224, Table 11.2, 2003**).**

The present invention further relates to a process for chip sealing a road surface, wherein a composition according to the present invention is applied to said road surface.

The present invention also relates to a process for chip sealing a road surface, wherein an emulsion is applied to said road surface followed by embedding a particulate material, wherein said emulsion comprises a $(1\rightarrow3)$-$\beta$-D-glucan, a cationic emulsifier, and a bituminous binder having a penetration of less than 70 $10^{-1}$ mm and more than 10 $10^{-1}$ mm according to ASTM D5-97, and wherein the average diameter of the particulate material is 3 mm or less as determined according to British Standard BS 63, preferably less than 2 mm,

wherein the $(1\rightarrow3)$-$\beta$-D-glucan is used in admixture with an oil,

wherein the emulsion comprises 0.0005 wt.% to 0.1 wt.% of the $(1\rightarrow3)$-$\beta$-D-glucan and 0.01 wt.% to 20 wt.% of the cationic emulsifier, based on the total weight of the emulsion,

wherein the $(1\rightarrow3)$-$\beta$-D-glucan is scleroglucan, and

wherein the the cationic emulsifier is:

(a) derived from amines having the formula:

$$R\text{-}NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p in an integer in the range of 0 to 6, and n is an integer in the range of 1 - 8; or

(b) derived from amidoamines having the formula:

$$R\text{-}C(O)NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8.

The present invention additionally relates to the use of an emulsion comprising a $(1\rightarrow3)$-$\beta$-D-glucan, a cationic emulsifier, and a bituminous binder having a penetration of less than 70 $10^{-1}$ mm and more than 10 $10^{-1}$ mm according to ASTM D5-97 for applying a waterproofing top seal layer to an asphalt layer,

wherein the $(1\rightarrow3)$-$\beta$-D-glucan is used in admixture with an oil,

wherein the emulsion comprises 0.0005 wt.% to 0.1 wt.% of the $(1\rightarrow3)$-$\beta$-D-glucan and 0.01 wt.% to 20 wt.% of the cationic emulsifier, based on the total weight of the emulsion,

wherein the $(1\rightarrow3)$-$\beta$-D-glucan is scleroglucan, and

wherein the the cationic emulsifier is:

(a) derived from amines having the formula:

$$R\text{-}NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p in an integer in the range of 0 to 6, and n is an integer in the range of 1 - 8; or

(b) derived from amidoamines having the formula:

$$R\text{-}C(O)NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8.

**Detailed description of the invention**

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The term "emulsion" is to be understood as a system in which liquid droplets and/or liquid crystals are dispersed in a liquid. In emulsions the droplets often exceed the usual limits for colloids in size. An emulsion is denoted by the symbol O/W if the continuous phase is an aqueous solution and by W/O if the continuous phase is an organic liquid (an "oil"). More complicated emulsions such as O/W/O (i.e. oil droplets contained within aqueous droplets dispersed in a continuous oil phase or three-phase emulsions) are also included by the term "emulsion". Photographic emulsions, although colloidal systems, are not emulsions in the sense of the term "emulsions" as used in this document (cf. International Union of Pure and Applied Chemistry, Manual of Symbols and Terminology for Physiochemical Quantities and Units, Appendix II, Definitions, Terminology, and Symbols in Colloid and Surface Chemistry, Part 1, web version 2001). The type of emulsion (O/W or W/O) is determined by the volume ratio of the two liquids. For example, with 5% water and 95% oil (an O/W phase ratio of 19), the emulsion is usually W/O.

In this document, "hard" bitumen is to be understood as a bitumen having a penetration of about 10 to about 100 $10^{-1}$ mm according to ASTM D5-97. On the other hand, "soft" bitumen is to be understood as having a penetration of about more than about 100 to about 350 $10^{-1}$ mm according to ASTM D5-97. As is well known in the art, the unit for penetration according to ASTM D5-97 is "$10^{-1}$ mm".

### The $(1\rightarrow3)$-$\beta$-D-glucan

According to the present invention, the $(1\rightarrow3)$-$\beta$-D-glucan is scleroglucan (CAS No. 39464-87-4).

The glucan is used in an admixture with an oil, preferably vegetable oil, more preferably a food grade vegetable oil, to protect glucan particles to conglomerate when they are contacted with an aqueous medium.

### The cationic emulsifier

Cationic emulsifiers are well known in the art. The cationic emulsifiers:

(a) are derived from amines having the formula:

$$R-NH-(C_mH_{2m}-NH)_p-(C_nH_{2n})-NH_2$$

wherein R is a $C_1$-$C_{30}$ aliphatic group, m is an integer in the range from 1 to 8, p in an integer in the range of 0 to 6, and n is an integer in the range of 1 - 8, or
(b) are derived from amidoamines having the formula:

$$R-C(O)NH-(C_mH_{2m}-NH)_p-(C_nH_{2n})-NH_2$$

wherein R is a $C_1$-$C_{30}$ aliphatic group, m is an integer in the range from 1 to 8, p is an integer in the range of 0 to 6, and n is an integer in the range of 1 - 8.

Quaternary amines include products such as diquaternary amines, e.g. the Redicote® products manufactured by AkzoNobel.

### The bituminous binder

The bitumen employed in the emulsions of the present invention may either be straight run products or processed products (cf. Kirk-Othmer, Encyclopedia of Chemical Technology, 4th Ed., Vol. 3, pages 689 - 724).

According to the present invention, the bituminous binder has a penetration of less than 70 $10^{-1}$ mm according to ASTM D5-97, preferably less than 65 $10^{-1}$ mm, more preferably less than 60 $10^{-1}$ mm and most preferably 55 $10^{-1}$ mm or less. It furthermore has a penetration of more than 10 $10^{-1}$ mm, preferably 15 $10^{-1}$ mm or more and most preferably 20 $10^{-1}$ mm or more. Well known penetration grades include 20/30, 35/50 and 40/60.

According to the present invention, the bituminous binder may comprise a blend of bituminous binders having different penetration grades, provided that the blend has a penetration of less than 70 $10^{-1}$ mm and more than 10 $10^{-1}$ mm according to ASTM D5-97. According to a preferred embodiment, the bituminous binder comprises a blend of a soft bitumen, i.e. a soft bitumen having a penetration of more than about 100 $10^{-1}$ mm according to ASTM D5-97, preferably more than about 100 or about 350 $10^{-1}$ mm, more preferably of more than about 100 to about 220 $10^{-1}$ mm, even more preferably about 160 to about 220 $10^{-1}$ mm, and a hard bitumen, i.e. a hard bitumen having a penetration of about 100 $10^{-1}$ mm or less according to ASTM D5-97, preferably about 100 or less to about 10 $10^{-1}$ mm, more preferably of about 60 to about 10 $10^{-1}$ mm, even more preferably about 50 to about 20 $10^{-1}$ mm. The blend preferably comprises a weight ratio of a soft bitumen to a hard bitumen in the range of 1 to 30, more preferably in the range of 1 to 10.

According to an embodiment the present invention, it is preferred that the bituminous binder is selected from the group consisting of paraffinic and naphtenic bitumen.

**Further components**

The emulsions according to the present application further preferably comprise an elastomer and/or a petroleum resin and/or a natural resin. The addition of an elastomer and/or a petroleum resin and/or a natural resin has the advantage that life of the road surface coated with the emulsion according to the present invention is enhanced. Elastomers, petroleum resins and natural resins are also beneficial for the flexibility of the coated road surface. The addition of an elastomer and/or a petroleum resin and/or a natural resin further reduces the temperature dependence of visco-elastic properties.

According to the present invention, the elastomer is preferably selected from the group consisting of ethylene-vinyl acetate copolymers, polybutadienes, polyisoprenes, ethylene-propylene copolymers, ethylene-propylene-diene copolymers, styrene-ethylene-butadiene-styrene copolymers, styrene-propylene-butadiene-styrene copolymers, butadiene-styrene diblock copolymers, styrene-butadiene styrene triblock copolymers, isoprene-styrene diblock copolymers, styrene-isoprene-styrene triblock copolymers, wherein the diblock or triblock copolymers may occur in morphological shapes as star-shaped polymers wherein a cross-linking agent such as divinyl benzene is employed in the manufacturing process. However, according to the present invention, it is preferred that the elastomer is a polymer comprising two adjacent, optionally substituted butadiene units such as isoprene, most preferably a polybutadiene, a polyisoprene, a styrene-ethylene-butadiene-styrene copolymer, a styrene-propylene-butadiene-styrene copolymer, a butadiene-styrene diblock copolymer, a styrene-butadiene-styrene triblock terpolymer, a isoprene-styrene diblock copolymer or a styrene-isoprene-styrene triblock terpolymer. More preferably, the elastomer is a polybutadiene, a polyisoprene, a styrene-ethylene-butadiene-styrene copolymer, a styrene-propylene-butadiene-styrene copolymer or a styrene-butadiene-styrene triblock terpolymer. According to another preferred embodiment of the present invention, the elastomer is an ethylene-vinyl acetate copolymer.

The petroleum resin is preferably selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics, or a mixture thereof. Most preferably, the petroleum resin is a C5 - C9 petroleum resin, a C9 - petroleum resin, a C5 - petroleum resin or a mixture thereof.

The natural resin is preferably selected from the group of rosin resins and terpene resins.

**The particulate material**

According to the present invention, the particulate material can be selected from the group consisting of aggregate material (e.g. chippings), rubber crumbs, fibres of e.g. vegetable origin, wood chips, waste biomass such as Empty Fruit Bunch, and mixtures thereof.

**The emulsion**

According to the present invention, the emulsion comprises about 25 to about 75 wt.% of an aqueous phase and about 75 to about 25 wt.% of an oil phase, based on the total weight of the emulsion. More preferably, the emulsion comprises about 30 to about 70 wt.% of an aqueous phase and about 70 to about 30 wt.% of an oil phase, based on the total weight of the emulsion. The oil phase essentially comprises the bituminous binder.

The amount of the $(1\rightarrow3)$-$\beta$-D-glucan in the emulsion is 0.0005 wt.% to 0.1 wt.%, based on the total weight of the emulsion, preferably 0.0005 wt.% to 0.05 wt.%, more preferably 0.0005 wt.% to 0.02 wt.%

The amount of the cationic emulsifier in the emulsion is 0.01 wt.% to 20.0 wt.%, preferably 0.01 wt.% to 10.0 wt.%, more preferably 0.01 wt.% to 5.0 wt.%, yet even more preferably 0.02 wt.% to 2.5 wt.% even yet more preferably 0.02 wt.% to 0.5 wt.% and in particular 0.02 to 0.2 wt.%, based on the total weight of the emulsion.

When present in the emulsions according to the present invention, the elastomer and/or the petroleum resin and/or the natural resin content is preferably 0.01 to 10.0 wt. %, more preferably 0.05 to 7.5 wt. %, of the elastomer and/or the petroleum resin and/or the natural resin, based on the total weight of the emulsion.

The bituminous emulsions according to the present invention are fast breaking and have excellent storage stabilities. Accordingly, the bituminous emulsions according to the present invention are characterized by a breaking index of 150 or less, preferably of 130 or less. A breaking index of 150 or less, preferably 130 or less, ensures in a sufficiently low breaking time of the emulsion when it is applied to a road surface, even under relatively humid and cold conditions which allows the use of such emulsions under less advantageous weather conditions.

In addition, the bituminous emulsions according to the present invention are characterized by a C-factor of 200 or less, preferably 150 or less and even more preferably 115 or less. The C-factor is defined herein as:

$$\text{C-factor} = \text{Penetration recovered binder } (10^{-1} \text{ mm}) \times (100 \times \text{Storage stability})^{3,5}$$

wherein the penetration is determined according to ASTM D D5-97 and the storage stability is determined according to NEN-EN 12847. The storage stability is the difference between the water content of the aqueous phase and the oil phase formed after separation. The lower the value of the difference, the better the storage stability. The storage stability is often expressed in a percentage and then this value must be multiplied by 100%.

The present invention also relates to a process for chip sealing a road surface, wherein an emulsion is applied to said road surface followed by embedding a particulate material, wherein said emulsion comprises a $(1\rightarrow3)$-$\beta$-D-glucan, a cationic emulsifier, and a bituminous binder having a penetration of less than 70 $10^{-1}$ mm and more than 10 $10^{-1}$ mm according to ASTM D5-97, wherein the average diameter of the particulate material is 3 mm or less as determined according to British Standard BS 63, preferably less than 2 mm, and wherein the application rate of the particulate material preferably is 0.1 - 0.6 kg/m$^3$,

wherein the $(1\rightarrow3)$-$\beta$-D-glucan is used in admixture with an oil,

wherein the emulsion comprises 0.0005 wt.%to 0.1 wt.% of the $(1\rightarrow3)$-$\beta$-D-glucan and 0.01 wt.% to 20 wt.% of the cationic emulsifier, based on the total weight of the emulsion,

wherein the $(1\rightarrow3)$-$\beta$-D-glucan is scleroglucan, and

wherein the cationic emulsifier is:

(a) derived from amines having the formula:

$$R-NH-(C_mH_{2m}-NH)_p-(C_nH_{2n})-NH_2$$

wherein R is a $C_1$-$C_{30}$ aliphatic group, m is an integer in the range from 1 to 8, p in an integer in the range of 0 to 6, and n is an integer in the range of 1 - 8; or
(b) derived from amidoamines having the formula:

$$R-C(O)NH-(C_mH_{2m}-NH)_p-(C_nH_{2n})-NH_2$$

wherein R is a $C_1$-$C_{30}$ aliphatic group, m is an integer in the range from 1 to 8, p is an integer in the range of 0 to 6, and n is an integer in the range of 1 - 8.

**Examples**

Example 1

A mixture of scleroglucan (Actigum® CS 6 purchased from IMCD, the Netherlands; scleroglucan content is about 83 wt.%) and a food grade vegetable oil (purchased from Mosselman N.V., Belgium, or Heybroek B.V., the Netherlands) was prepared by mixing the two components at room temperature in a weight ratio of 1 : 2. The food grade vegetable oil protects the scleroglucan particles to conglomerate in an aqueous medium and hence a homogenous dispersion is obtained when this mixture is added to water whilst stirring.

Emulsions were produced according the following procedure. To 99.232 units of weight of water at a temperature of about 60°C, 0,428 units of weight of a 30% hydrochloric acid solution was added whilst gently stirring. After the addition of 0.24 units of weight of Redicote® E9 fatty amine emulsifier (purchased from Akzo Nobel) to the water, 0.1 units of weight of the scleroglucan- food grade oil (1 : 2) mixture was added. Both the water and a hard bitumen were fed to an Atomix emulsification unit (Emulbitume, France) and were emulsified to an oil in water (O/W) emulsion having a water content of about 40 wt.% water. The emulsions were prepared with the following hard bitumen: 40 - 60 $10^{-1}$ mm (ex-Total Antwerp Belgium refinery), 35 - 50 $10^{-1}$ mm and 20 - 30 $10^{-1}$ mm (both from ex-Total Dunkirk France refinery. For these emulsions, a double amount of the Actigum® CS 6 - food grade oil (1 : 2) mixture was used (0.2 wt. %) Emulsion properties are listed in Table 1 below.

Table 1

|  | Method of analysis | 20 - 30 $10^{-1}$ mm | 35 - 50 $10^{-1}$ mm | 40 - 60 $10^{-1}$ mm |
|---|---|---|---|---|
| **Water content %** | NEN-EN 1428 | 41,2 | 41,1 | 41,2 |
| **Efflux time (25°C in sec.)** | NEN-EN 3947 | 41 | 33 | 32 |
| **pH** | NEN-EN 12850 | 2,4 | 2,4 | 2,4 |

(continued)

| | Method of analysis | 20 - 30 10⁻¹ mm | 35 - 50 10⁻¹ mm | 40 - 60 10⁻¹ mm |
|---|---|---|---|---|
| Breaking index (20°C) | NEN-EN 13075-1 | 103 | 112 | 114 |
| Pen. bitumen | NEN-EN 1426 | 21 | 43 | 53 |

Table 2

| | Initial water content % | Water content Upper layer % | Water content Lower layer % | ST = Upper layer - lower layer % |
|---|---|---|---|---|
| 20 - 30 10⁻¹ mm | 41.2 | 41.4 | 40.1 | 1.3 |
| 35 - 50 10⁻¹ mm | 41.1 | 41.4 | 40.2 | 1.2 |
| 40 - 60 10⁻¹ mm | 41.2 | 41.7 | 40.7 | 1.0 |

The storage stability was measured according to NEN-EN 12847 after 7 days of storage at ambient temperatures (18 - 22°C) and the results are presented in Table 2.

This example clearly demonstrates that very storage stable bitumen emulsions can be produced by using only a small amount of Actigum® CS 6 in the aqueous phase.

Example 2

A bitumen emulsion was prepared according to the procedure as described in Example 1. A 40 - 60 10⁻¹ mm bitumen was used (ex-Total Antwerp Belgium refinery) and 0.14 units of weight of a Actigum® CS 6 - food grade oil (1:2) mixture was used. Prior to emulsification, the water mixture was filtered using a glass wool filter so Actigum® CS 6 particles, which were not dissolved, were removed from the aqueous phase. It was not possible to quantify the amount of Actigum® CS 6 recovered by filtration as most of the material was filtered off. However, the storage stability of the emulsion used was similar as the storage stability for the unfiltered material. The results are presented in Table 3.

Table 3

| | Method of analysis | 40 - 60 10⁻¹ mm (filtered) | 40 - 60 10⁻¹ mm (unfiltered) |
|---|---|---|---|
| Water content % | NEN-EN 1428 | 43.9 | 41.2 |
| Efflux time (25°C in sec.) | NEN-EN 3947 | 27 | 32 |
| pH | NEN-EN 12850 | 2,2 | 2,4 |
| Breaking index (20°C) | NEN-EN 13075-1 | 116 | 114 |
| Pen. bitumen | NEN-EN 1426 | 53 | 53 |

Table 4

| | Initial water content % | Water content Upper layer % | Water content Lower layer % | ST = Upper layer - lower layer % |
|---|---|---|---|---|
| 40 - 60 10⁻¹ mm (filtered) | 43,9 | 44,4 | 43,0 | 1,4 |
| 40 - 60 10⁻¹ mm (unfiltered) | 41,2 | 41,7 | 40,7 | 1,0 |

Example 3

An emulsion was prepared according to the method of Example 1 from a 10 - 20 10$^{-1}$ mm bitumen (ex Total Dunkirk France refinery). This material is a glass-like material with a relatively high softening point (ring & ball temperature >> 55 °C).

The emulsification process with the 0 % Actigum® CS 6 addition (Sample I) was not stable. However, it was possible to collect a sample which was stable for at least one day. The properties of the sample are presented in the Table 5. The emulsification with the 0.2 wt. % addition of an Actigum® CS 6 - food grade vegetable oil (1 : 2) mixture (Sample II) went much more smoothly and it was possible to continuously produce a homogeneous emulsion.

Table 5

|  | Method of analysis | Sample I 0% | Sample II 0.2 % |
|---|---|---|---|
| **Water content** | NEN-EN 1428 | 40.0 | 39.8 |
| **Efflux time (25°C in sec.)** | NEN-EN 3947 | 25 | 35 |
| **pH** | NEN-EN 12850 | 2.2 | 2.2 |
| **Breaking index (20°C)** | NEN-EN 13075-1 | 118 | 116 |

The storage stability of these samples was judged visually (Table 6).

Table 6

|  | **Visual inspection** |
|---|---|
| Sample I (0 %) after one day | Separation was clearly visible, solid bitumen layer on the bottom |
| Sample II (0.2 %) after one day | Homogeneous emulsion, no separation |
| Sample I (0 %) after 6 days | Almost full separation of the bitumen and the water phase |
| Sample II (0.2%) after 6 days | Homogeneous emulsion, no separation |

Example 4

A mixture of scleroglucan (Actigum® CS 6 purchased from Cargill, France; scleroglucan content about 83 wt.%) and a food grade vegetable oil (purchased from Mosselman N.V., Belgium, or Heybroek B.V., the Netherlands) was prepared by mixing the two components at room temperature in a weight ratio of 1 : 2. The food grade vegetable oil protects the scleroglucan particles to conglomerate in an aqueous medium and, hence, a homogenous dispersion is obtained when this mixture is added to water whilst stirring. Emulsions were produced according the following procedure. To 99.009 units of weight of water at a temperature of about 60°C, 0,467 units of weight of a 30% hydrochloric acid solution was added whilst gently stirring. After the addition of 0.324 units of weight of Redicote® E9 fatty amine emulsifier (purchased from Akzo Nobel) to the water, 0.2 units of weight of the scleroglucan- food grade oil (1 : 2) mixture was added. Both the water and a hard bitumen, i.e. Total bitumen with a penetration ranging from 20-30 10$^{-1}$ mm (Total refinery Dunkirk) were fed to an emulsion mill (a Trigonal Mill obtained from Siefer Machinenfabrik GmbH & Co KG) and were emulsified to an oil in water (O/W) emulsion having a water content of about 41 wt.% water. The storage stability was determined after seven days. The compositions and properties of the emulsions are summarised in Table 7.

Table 7

| Water content (%) | NEN-EN 1428 | 41 |
|---|---|---|
| Sieve residue | NEN-EN 1429 | < 0.1 |
| Settling tendency (7 days@ 20 °C) | NEN-EN 12847 | 0.001 |
| pH | NEN-EN 12850 | 1.9 |
| Efflux time (ISO 4 @ 25 is sec) | NEN-EN 3947 | 37 |
| Breaking index (25 °C) | NEN-EN 13075-1 | 124 |
| Needle penetration of the recovered binder (mm/10) | NEN-EN 1426[a] | 25 |

(continued)

| Volume average particle size (μm) | | 6.7 |
|---|---|---|
| Volume fraction of particle > 8 μm | | 25 |
| C-factor | | 0.0079 |
| [a] Equivalent to ASTM D5-97. | | |

After production the emulsion was packed in 1000 liter containers. Ten days later, the emulsion was re-packed in 25 kg buckets and brought to a job site where it was applied to an old DAB asphalt top layer of seven years old under the following weather conditions: asphalt temperature was about 20°C, air temperature was about 22°C and relative humidity was about 61%. The rate of application using a roller brush was about 0.6 kg/m$^2$. After 5 minutes when the emulsion started to break visually, sand (average diameter of less than 2 mm) was applied at a rate of 0.05 - 0.1 kg/m$^2$. After 30 minutes, the emulsion coagulated fully and the job was opened for traffic. No wheel tracks were visible and both sides of the job, so a surface was obtained without the use of aggregates with an average diameter of 2 mm or more.

The same emulsion was used in a different project as a surface treatment on recently constructed but damaged DAB. The treatment was performed under the following weather conditions: environmental temperatures between 11.2° - 16.6°C, relative humidity 68%. The emulsion was sprayed using a standard tack coat emulsion spraying unit; the spraying temperature was 64°C, spraying rate was 0.6-0.8 kg/m$^2$. Shortly after application (before the emulsion was fully broken) the surface was sanded (0.3-0.5 kg/m$^2$) using crushed stone (about 0-3 mm).

## Claims

1. A waterproofing chipless asphalt top seal composition comprising (a) a particulate material, wherein the average diameter of the particulate material is 3 mm or less as determined according to British Standard BS 63, and (b) an emulsion comprising a (1→3)-β-D-glucan, a cationic emulsifier, and a bituminous binder having a penetration of less than 70·10$^{-1}$ mm and more than 10·10$^{-1}$ mm according to ASTM D5-97,
wherein the (1→3)-β-D-glucan is used in admixture with an oil,
wherein the emulsion comprises 0.0005 wt.% to 0.1 wt.% of the (1→3)-β-D-glucan and 0.01 wt.% to 20 wt.% of the cationic emulsifier, based on the total weight of the emulsion,
wherein the (1→3)-β-D-glucan is scleroglucan, and
wherein the cationic emulsifier is:

   (a) derived from amines having the formula:

$$R\text{-NH-}(C_mH_{2m}\text{-NH})_p\text{-}(C_nH_{2n})\text{-NH}_2$$

   wherein R is a $C_1$-$C_{30}$ aliphatic group, m is an integer in the range from 1 to 8, p in an integer in the range of 0 to 6, and n is an integer in the range of 1 - 8; or
   (b) derived from amidoamines having the formula:

$$R\text{-C(O)NH-}(C_mH_{2m}\text{-NH})_p\text{-}(C_nH_{2n})\text{-NH}_2$$

   wherein R is a $C_1$-$C_{30}$ aliphatic group, m is an integer in the range from 1 to 8, p is an integer in the range of 0 to 6, and n is an integer in the range of 1 - 8.

2. Composition according to claim 1, wherein the emulsion comprises 25 to 75 wt.% of an aqueous phase and 75 to 25 wt.% of an oil phase, based on the total weight of the emulsion.

3. Composition according to claim 1 or 2, wherein the bituminous binder comprises bitumen, a petroleum resin, or a combination thereof.

4. Composition according to any one of the preceding claims, wherein the emulsion comprises an elastomer and/or a petroleum resin and/or a natural resin.

5. Composition according to Claim 4, wherein the elastomer is selected from the group consisting of ethylene-vinyl acetate copolymers, polybutadienes, polyisoprenes, ethylene-propylene copolymers, ethylene-propylene-diene copolymers, styrene-ethylene-butadiene-styrene copolymers, styrene-propylene-butadiene-styrene copolymers, butadiene-styrene diblock copolymers, styrene-butadiene-styrene triblock copolymers, isoprene-styrene diblock copolymers, styrene-isoprene-styrene triblock copolymers, and mixtures thereof.

6. Composition according to Claim 4, wherein the petroleum resin is selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics, or a mixture thereof.

7. Composition according to Claim 4, wherein the natural resin is selected from the group of rosin resins and terpene resins.

8. Composition according to any one of the preceding claims, wherein the emulsion has a breaking index of 150 or less as determined according to NEN-EN 13075-1.

9. Composition according to any one of the preceding claims, wherein the emulsion has a C-factor of 200 or less, the C-factor being defined as:

$$\text{C-factor} = \text{Penetration recovered binder } (10^{-1} \text{ mm}) \times (100 \times \text{Storage stability})^{3,5}$$

wherein the penetration is determined according to ASTM D D5-97 and the storage stability is determined according to NEN-EN 12847.

10. Process for chip sealing a road surface, wherein a composition according to any one of Claims 1 - 9 is applied to said road surface.

11. Process for chip sealing a road surface, wherein an emulsion is applied to said road surface followed by embedding a particulate material, wherein said emulsion comprises a $(1\rightarrow3)$-$\beta$-D-glucan, a cationic emulsifier, and a bituminous binder having a penetration of less than $70 \cdot 10^{-1}$ mm and more than $10 \cdot 10^{-1}$ mm according to ASTM D5-97, and wherein the average diameter of the particulate material is 3 mm or less as determined according to British Standard BS 63,
wherein the $(1\rightarrow3)$-$\beta$-D-glucan is used in admixture with an oil,
wherein the emulsion comprises 0.0005 wt.% to 0.1 wt.% of the $(1\rightarrow3)$-$\beta$-D-glucan and 0.01 wt.% to 20 wt.% of the cationic emulsifier, based on the total weight of the emulsion,
wherein the $(1\rightarrow3)$-$\beta$-D-glucan is scleroglucan, and
wherein the cationic emulsifier is:

    (a) derived from amines having the formula:

$$R\text{-}NH\text{-}(C_mH_{2m}\text{-}NH)_p\text{-}(C_nH_{2n})\text{-}NH_2$$

    wherein R is a $C_1$-$C_{30}$ aliphatic group, m is an integer in the range from 1 to 8, p in an integer in the range of 0 to 6, and n is an integer in the range of 1 - 8; or
    (b) derived from amidoamines having the formula:

$$R\text{-}C(O)NH\text{-}(C_mH_{2m}\text{-}NH)_p\text{-}(C_nH_{2n})\text{-}NH_2$$

    wherein R is a $C_1$-$C_{30}$ aliphatic group, m is an integer in the range from 1 to 8, p is an integer in the range of 0 to 6, and n is an integer in the range of 1 - 8.

12. Process according to Claim 11, wherein the application rate of the particulate material is 0.1 - 0.6 kg/m$^3$.

13. Use of an emulsion comprising a $(1\rightarrow3)$-$\beta$-D-glucan, a cationic emulsifier, and a bituminous binder having a penetration of less than $70 \cdot 10^{-1}$ mm and more than $10 \cdot 10^{-1}$ mm according to ASTM D5-97 for applying a waterproofing top seal layer to an asphalt layer,
wherein the $(1\rightarrow3)$-$\beta$-D-glucan is used in admixture with an oil,

wherein the emulsion comprises 0.0005 wt.% to 0.1 wt.% of the $(1\rightarrow3)$-$\beta$-D-glucan and 0.01 wt.% to 20 wt.% of the cationic emulsifier, based on the total weight of the emulsion,
wherein the $(1\rightarrow3)$-$\beta$-D-glucan is scleroglucan, and
wherein the cationic emulsifier is:

(a) derived from amines having the formula:

$$R-NH-(C_mH_{2m}-NH)_p-(C_nH_{2n})-NH_2$$

wherein R is a $C_1$-$C_{30}$ aliphatic group, m is an integer in the range from 1 to 8, p is an integer in the range of 0 to 6, and n is an integer in the range of 1 - 8; or
(b) derived from amidoamines having the formula:

$$R-C(O)NH-(C_mH_{2m}-NH)_p-(C_nH_{2n})-NH_2$$

wherein R is a $C_1$-$C_{30}$ aliphatic group, m is an integer in the range from 1 to 8, p is an integer in the range of 0 to 6, and n is an integer in the range of 1 - 8.


**Patentansprüche**

1. Wasserabdichtende splittfreie Asphaltdeckschichtzusammensetzung, umfassend (a) ein teilchenförmiges Material, wobei der gemäß dem British Standard BS 63 bestimmte mittlere Durchmesser des teilchenförmigen Materials 3 mm oder weniger beträgt, und (b) eine Emulsion, umfassend ein $(1\rightarrow3)$-$\beta$-D-Glucan, einen kationischen Emulgator und ein bituminöses Bindemittel mit einer Penetration von weniger als $70\cdot10^{-1}$ mm und mehr als $10\cdot10^{-1}$ mm gemäß ASTM D5-97;
wobei das $(1\rightarrow3)$-$\beta$-D-Glucan im Gemisch mit einem Öl verwendet wird;
wobei die Menge des $(1\rightarrow3)$-$\beta$-D-Glucans in der Emulsion 0,0005 Gew.-% bis 0,1 Gew.-% beträgt und wobei die Menge des kationischen Emulgators 0,01 Gew.-% bis 20 Gew.-% beträgt, bezogen auf das Gesamtgewicht der Emulsion;
wobei es sich bei dem $(1\rightarrow3)$-$\beta$-D-Glucan um Scleroglucan handelt; und
wobei für den kationischen Emulgator gilt:

(a) er ist abgeleitet von Aminen der Formel:

$$R-NH-(C_mH_{2m}-NH)_p-(C_nH_{2n})-NH_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 bis 8 ist; oder
(b) er ist abgeleitet von Amidoaminen der Formel:

$$R-C(O)NH-(C_mH_{2m}-NH)_p-(C_nH_{2n})-NH_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 bis 8 ist.

2. Zusammensetzung gemäß Anspruch 1, wobei die Emulsion 25 bis 75 Gew.-% einer wässrigen Phase und 75 bis 25 Gew.-% einer Ölphase umfasst, bezogen auf das Gesamtgewicht der Emulsion.

3. Zusammensetzung gemäß Anspruch 1 oder 2, wobei das bituminöse Bindemittel Bitumen, ein Erdölharz oder eine Kombination davon umfasst.

4. Zusammensetzung gemäß einem der vorstehenden Ansprüche, wobei die Emulsion ein Elastomer und/oder ein Erdölharz und/oder ein natürliches Harz umfasst.

5. Zusammensetzung gemäß Anspruch 4, wobei das Elastomer aus der Gruppe ausgewählt ist, die aus Ethylen-Vinylacetat-Copolymeren, Polybutadienen, Polyisoprenen, Ethylen-Propylen-Copolymeren, Ethylen-Propylen-Dien-Copolymeren, Styrol-Ethylen-Butadien-Styrol-Copolymeren, Styrol-Propylen-Butadien-Styrol-Copolymeren, Butadien-Styrol-Diblockcopolymeren, Styrol-Butadien-Styrol-Triblockcopolymeren, Isopren-Styrol-Diblockcopolymeren, Styrol-Isopren-Styrol-Triblockcopolymeren und Gemischen davon besteht.

6. Zusammensetzung gemäß Anspruch 4, wobei das Erdölharz aus der Gruppe ausgewählt ist, die aus Harzen, welche durch Polymerisation von in ungesättigten Erdölfraktionen vorhandenen ungesättigten Kohlenwasserstoffen hergestellt sind, Cumaron-Inden-Harzen, hydrierten Erdölharzen, modifizierten Erdölharzen, Harzen auf Cyclopentadienbasis, Thermoplasten oder einem Gemisch davon besteht.

7. Zusammensetzung gemäß Anspruch 4, wobei das natürliche Harz aus der Gruppe der Kolophoniumharzen und Terpenharzen ausgewählt ist.

8. Zusammensetzung gemäß einem der vorstehenden Ansprüche, wobei die Emulsion einen gemäß NEN-EN 13075-1 bestimmten Brechindex von 150 oder weniger aufweist.

9. Zusammensetzung gemäß einem der vorstehenden Ansprüche, wobei die Emulsion einen C-Faktor von 200 oder weniger aufweist, wobei der C-Faktor definiert ist als:
C-Faktor = Penetration des zurückgewonnenen Bindemittels ($10^{-1}$ mm) x (100 x Lagerstabilität)$^{3,5}$, wobei die Penetration gemäß ASTM D5-97 bestimmt wird und die Lagerstabilität gemäß NEN-EN 12847 bestimmt wird.

10. Verfahren zur splitthaltigen Versiegelung einer Straßenoberfläche, wobei eine Zusammensetzung gemäß einem der Ansprüche 1 bis 9 auf die Straßenoberfläche aufgetragen wird.

11. Verfahren zur splitthaltigen Versiegelung einer Straßenoberfläche, wobei eine Emulsion auf die Straßenoberfläche aufgetragen wird und anschließend ein teilchenförmiges Material darin eingebettet wird, wobei die Emulsion ein (1→3)-β-D-Glucan, einen kationischen Emulgator und ein bituminöses Bindemittel mit einer Penetration von weniger als $70 \cdot 10^{-1}$ mm und mehr als $10 \cdot 10^{-1}$ mm gemäß ASTM D5-97 umfasst und wobei der gemäß dem British Standard BS 63 bestimmte mittlere Durchmesser des teilchenförmigen Materials 3 mm oder weniger beträgt;
wobei das (1→3)-β-D-Glucan im Gemisch mit einem Öl verwendet wird;
wobei die Menge des (1→3)-β-D-Glucans in der Emulsion 0,0005 Gew.-% bis 0,1 Gew.-% beträgt und wobei die Menge des kationischen Emulgators 0,01 Gew.-% bis 20 Gew.-% beträgt, bezogen auf das Gesamtgewicht der Emulsion;
wobei es sich bei dem (1→3)-β-D-Glucan um Scleroglucan handelt; und
wobei für den kationischen Emulgator gilt:

(a) er ist abgeleitet von Aminen der Formel:

$$R\text{-}NH\text{-}(C_mH_{2m}\text{-}NH)_p\text{-}(C_nH_{2n})\text{-}NH_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 bis 8 ist; oder
(b) er ist abgeleitet von Amidoaminen der Formel:

$$R\text{-}C(O)NH\text{-}(C_mH_{2m}\text{-}NH)_p\text{-}(C_nH_{2n})\text{-}NH_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 bis 8 ist.

12. Verfahren gemäß Anspruch 11, wobei die Auftragungsmenge des teilchenförmigen Materials 0,1 bis 0,6 kg/m$^3$ beträgt.

13. Verwendung einer Emulsion, die ein (1→3)-β-D-Glucan, einen kationischen Emulgator und ein bituminöses Bindemittel mit einer Penetration von weniger als $70 \cdot 10^{-1}$ mm und mehr als $10 \cdot 10^{-1}$ mm gemäß ASTM D5-97 umfasst, zum Auftragen einer wasserabdichtenden Deckschicht auf eine Asphaltschicht,
wobei das (1→3)-β-D-Glucan im Gemisch mit einem Öl verwendet wird;
wobei die Menge des (1→3)-β-D-Glucans in der Emulsion 0,0005 Gew.-% bis 0,1 Gew.-% beträgt und wobei die Menge des kationischen Emulgators 0,01 Gew.-% bis 20 Gew.-% beträgt, bezogen auf das Gesamtgewicht der Emulsion;
wobei es sich bei dem (1→3)-β-D-Glucan um Scleroglucan handelt; und

wobei für den kationischen Emulgator gilt:

(a) er ist abgeleitet von Aminen der Formel:

$$R\text{-}NH\text{-}(C_mH_{2m}\text{-}NH)_p\text{-}(C_nH_{2n})\text{-}NH_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 bis 8 ist; oder
(b) er ist abgeleitet von Amidoaminen der Formel:

$$R\text{-}C(O)NH\text{-}(C_mH_{2m}\text{-}NH)_p\text{-}(C_nH_{2n})\text{-}NH_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 bis 8 ist.

## Revendications

1. Composition d'enduit superficiel à base d'asphalte sans gravillon imperméabilisant comprenant (a) un matériau particulaire, dans laquelle le diamètre moyen du matériau particulaire est de 3 mm ou moins tel que déterminé selon la norme britannique BS 63, et (b) une émulsion comprenant un $(1{\rightarrow}3)$-$\beta$-D-glucane, un émulsifiant cationique et un liant bitumineux ayant une pénétration inférieure à $70{\cdot}10^{-1}$ mm et supérieure à $10{\cdot}10^{-1}$ mm selon la norme ASTM D5-97,
dans laquelle le $(1{\rightarrow}3)$-$\beta$-D-glucane est utilisé en mélange avec une huile, dans laquelle l'émulsion comprend 0,0005 % en poids à 0,1 % en poids de $(1{\rightarrow}3)$-$\beta$-D-glucane et 0,01 % en poids à 20 % en poids de l'émulsifiant cationique, sur la base du poids total de l'émulsion,
dans laquelle le $(1{\rightarrow}3)$-$\beta$-D-glucane est le scléroglucane, et
dans laquelle l'émulsifiant cationique est :

(a) dérivé d'amines de formule :

$$R\text{-}NH\text{-}(C_mH_{2m}\text{-}NH)_p\text{-}(C_nH_{2n})\text{-}NH_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8 ; ou
(b) dérivé d'amidoamines de formule :

$$R\text{-}C(O)NH\text{-}(C_mH_{2m}\text{-}NH)_p\text{-}(C_nH_{2n})\text{-}NH_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8.

2. Composition selon la revendication 1, dans laquelle l'émulsion comprend 25 à 75 % en poids d'une phase aqueuse et 75 à 25 % en poids d'une phase huileuse, sur la base du poids total de l'émulsion.

3. Composition selon la revendication 1 ou 2, dans laquelle le liant bitumineux comprend du bitume, une résine de pétrole ou une combinaison de ceux-ci.

4. Composition selon l'une quelconque des revendications précédentes, dans laquelle l'émulsion comprend un élastomère et/ou une résine de pétrole et/ou une résine naturelle.

5. Composition selon la revendication 4, dans laquelle l'élastomère est choisi dans le groupe comprenant des copolymères d'éthylène-acétate de vinyle, des polybutadiènes, des polyisoprènes, des copolymères d'éthylène-propylène, des copolymères d'éthylène-propylène-diène, des copolymères de styrène-éthylène-butadiène-styrène, des copolymères de styrène-propylène-butadiène-styrène, des copolymères diblocs de butadiène-styrène, des copolymères triblocs de styrène-butadiène-styrène, des copolymères diblocs de styrène-isoprène, des copolymères triblocs de styrène-isoprène-styrène, et des mélanges de ceux-ci.

6. Composition selon la revendication 4, dans laquelle la résine de pétrole est choisie dans le groupe comprenant des résines fabriquées par polymérisation d'hydrocarbures insaturés présents dans les fractions de pétrole insaturées, des résines de coumarone-indène, des résines de pétrole hydrogénées, des résines de pétrole modifiées, des résines à base de cyclopentadiène, des thermoplastiques, ou un mélange de ceux-ci.

7. Composition selon la revendication 4, dans laquelle la résine naturelle est choisie dans le groupe comprenant des résines de colophane et des résines de terpène.

8. Composition selon l'une quelconque des revendications précédentes, dans laquelle l'émulsion a un indice de rupture de 150 ou moins tel que déterminé selon NEN-EN 13075-1.

9. Composition selon l'une quelconque des revendications précédentes, dans laquelle l'émulsion a un Facteur C de 200 ou moins, le Facteur C étant défini comme :

$$\text{Facteur C} = \text{liant récupéré de pénétration } (10^{-1} \text{ mm}) \times (100 \times \text{stabilité au stockage})^{3,5}$$

dans laquelle la pénétration est déterminée selon ASTM D D5-97 et la stabilité au stockage est déterminée selon NEN-EN 12847.

10. Méthode pour appliquer en revêtement un enduit superficiel sur une surface de route, dans laquelle une composition selon l'une quelconque des revendications 1 à 9 est appliquée sur ladite surface de route.

11. Méthode pour appliquer en revêtement un enduit superficiel sur une surface de route, dans laquelle une émulsion est appliquée sur ladite surface de route, suivi par incorporation d'un matériau particulaire, dans lequel ladite émulsion comprend un $(1\rightarrow3)$-$\beta$-D-glucane, un émulsifiant cationique et un liant bitumineux ayant une pénétration inférieure à $70 \cdot 10^{-1}$ mm et supérieure à $10 \cdot 10^{-1}$ mm selon la norme ASTM D5-97, et dans laquelle le diamètre moyen du matériau particulaire est de 3 mm ou moins tel que déterminé selon la norme britannique BS 63,
dans laquelle le $(1\rightarrow3)$-$\beta$-D-glucane est utilisé en mélange avec une huile,
dans laquelle l'émulsion comprend 0,0005 % en poids à 0,1 % en poids de $(1\rightarrow3)$-$\beta$-D-glucane et 0,01 % en poids à 20 % en poids de l'émulsifiant cationique, sur la base du poids total de l'émulsion,
dans laquelle le $(1\rightarrow3)$-$\beta$-D-glucane est le scléroglucane, et
dans laquelle l'émulsifiant cationique est :

(a) dérivé d'amines de formule :

$$R\text{-NH-}(C_mH_{2m}\text{-NH})_p\text{-}(C_nH_{2n})\text{-NH}_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8 ; ou
(b) dérivé d'amidoamines de formule :

$$R\text{-C(O)NH-}(C_mH_{2m}\text{-NH})_p\text{-}(C_nH_{2n})\text{-NH}_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8.

12. Méthode selon la revendication 11, dans laquelle le débit d'application du matériau particulaire étant de 0,1 à 0,6 kg/m$^3$.

13. Utilisation d'une émulsion comprenant un $(1\rightarrow3)$-$\beta$-D-glucane, un émulsifiant cationique et un liant bitumineux ayant une pénétration inférieure à $70 \cdot 10^{-1}$ mm et supérieure à $10 \cdot 10^{-1}$ mm selon ASTM D5-97 pour appliquer une couche d'étanchéité supérieure imperméabilisante sur une couche d'asphalte,
dans laquelle le $(1\rightarrow3)$-$\beta$-D-glucane est utilisé en mélange avec une huile,
dans laquelle l'émulsion comprend 0,0005 % en poids à 0,1 % en poids de $(1\rightarrow3)$-$\beta$-D-glucane et 0,01 % en poids à 20 % en poids de l'émulsifiant cationique, sur la base du poids total de l'émulsion,

dans laquelle le (1→3)-β-D-glucane est du scléroglucane, et
dans laquelle l'émulsifiant cationique est :

(a) dérivé d'amines de formule :

$$R\text{-}NH\text{-}(C_mH_{2m}\text{-}NH)_p\text{-}(C_nH_{2n})\text{-}NH_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8 ; ou
(b) dérivé d'amidoamines de formule :

$$R\text{-}C(O)NH\text{-}(C_mH_{2m}\text{-}NH)_p\text{-}(C_nH_{2n})\text{-}NH_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5246986 A
- US 5750598 A
- GB 2452903 A
- WO 2009113854 A

**Non-patent literature cited in the description**

- Sulfur/Asfalt binders for Road Construction. **C. GARRIGUES ; P. VINCENT.** New uses of Sulfur. 1975, 130-153
- *Advances in Chemistry,* vol. 140, ISBN 9780841202184
- Shell Bitumen Handbook. 2003, 224
- Appendix II, Definitions, Terminology, and Symbols in Colloid and Surface Chemistry, Part 1, web version. International Union of Pure and Applied Chemistry, Manual of Symbols and Terminology for Physio-chemical Quantities and Units. 2001
- *CHEMICAL ABSTRACTS,* 39464-87-4
- Kirk-Othmer, Encyclopedia of Chemical Technology. vol. 3, 689-724